# EUROPÄISCHE PATENTSCHRIFT

(11) **EP 1 022 195 B1**
(45) Veröffentlichungstag und Bekanntmachung des Hinweises auf die Patenterteilung: **31.05.2006**
(21) Anmeldenummer: 99122369.4
(22) Anmeldetag: 10.11.1999
(51) Int. Cl.: B60R 16/02, H01M 8/04

(54) **Stromversorgungssystem für ein Fahrzeug, Fahrzeug und Bauteil für ein Fahrzeug**
Vehicle power supply, vehicle and vehicle element
Système d'alimentation en courant d'un véhicule,véhicule et élément de véhicule

(30) Priorität: 20.01.1999 DE 19902051
(43) Veröffentlichungstag der Anmeldung: 26.07.2000
(73) Patentinhaber: DaimlerChrysler AG, 70567 Stuttgart (DE)
(72) Erfinder: Kübler, Eberhard, 71272 Renningen (DE); Lamm, Arnold, Dr., 89275 Elchingen (DE); Müller, Jens, 89081 Ulm (DE)

(56) Entgegenhaltungen:
- EP-A- 0 677 417
- EP-A- 0 711 981
- WO-A-92/02964
- DE-A- 19 703 171
- US-A- 5 830 593

## Beschreibung

Die vorliegende Erfindung betrifft eine Stromversorgungseinrichtung für ein Fahrzeug, insbesondere Kraftfahrzeug, mit den Merkmalen des Oberbegriffs des Anspruchs 1 sowie ein Fahrzeug, insbesondere Kraftfahrzeug, mit einer derartigen Stromversorgungseinrichtung sowie ein Bauteil für ein Fahrzeug, insbesondere Kraftfahrzeug, mit den Merkmalen des Oberbegriffs des Anspruchs 13.

Bei herkömmlichen Kraftfahrzeugen ist zur Erzeugung von elektrischer Energie ein üblicherweise als Lichtmaschine bezeichneter Generator vorgesehen, der vom Verbrennungsmotor des Fahrzeugantriebes angetrieben wird. Der von der Lichtmaschine gelieferte Strom wird über ein eine Vielzahl von Kabeln aufweisendes zentrales Bordnetz den elektrischen Verbrauchern im Fahrzeug zur Verfügung gestellt. Die Lichtmaschine dient auch zum Laden der Fahrzeugbatterie, die bei Motorstillstand, Motorstart und niedrigen Motordrehzahlen die für das Bordnetz notwendige Stromversorgung puffert. Der Gesamtwirkungsgrad einer Stromversorgungseinrichtung mit Generator ist sehr niedrig, da thermische Energie zunächst in mechanische und anschließend in elektrische Energie umgewandelt werden muß.

Bei vielen modernen Fahrzeugen ist aufgrund der Vielzahl im ganzen Fahrzeug verteilter elektrischer Verbraucher der elektrische Leistungsbedarf derart angestiegen, daß die Stromerzeugung wesentlich zum Primärenergie- bzw. Treibstoffverbrauch beiträgt. Zur Verbesserung des Wirkungsgrades ist es in der DE 195 23 109 A1 schon vorgeschlagen worden, die über das Bordnetz vermittelte zentrale Stromversorgung der elektrischen Verbraucher dadurch zu verbessern, daß anstelle einer Lichtmaschine ein Brennstoffzellensystem verwendet wird. Dadurch kann der benötigte Strom aufgrund des im Vergleich zum Generator besseren Wirkungsgrades der Brennstoffzelle mit deutlich verringertem Kraftstoffverbrauch bereitgestellt werden. Ein ähnlicher Vorschlag ist aus der DE 197 03 171 A1 bekannt. Auch dort wird die Stromversorgung der am Bordnetz hängenden elektrischen Verbraucher durch ein zentrales Brennstoffzellenaggregat vorgeschlagen, das zwei Brennstoffzellenstapel aufweist, die parallel oder in Serie geschaltet sind, wobei mit jedem der Stapel jeweils eine eigene Gruppe von Bordnetzverbrauchern versorgt werden kann. Ein anderer Vorschlag geht dahin, neben dem üblichen 12 Volt-Bordnetz ein zweites Bordnetz mit einer höheren Spannung, beispielsweise 42 Volt, vorzusehen, wodurch die Leitungsverluste zu den angeschlossenen Verbrauchern durch die im Vergleich zum 12 Volt-Netz verringerten Stromstärken verringert werden sollen.

Der Erfindung liegt die Aufgabe zugrunde, die Stromversorgung eines Fahrzeuges, insbesondere eines Kraftfahrzeuges, hinsichtlich des erreichbaren Wirkungsgrades zu verbessern. Insbesondere soll auch ein besonders montagefreundliches Stromversorgungssystem ermöglicht werden.

Zur Lösung dieser Aufgabe wird erfindungsgemäß eine Stromversorgungseinrichtung mit den Merkmalen des Anspruchs 1 sowie ein Fahrzeug mit einer derartigen Stromversorgungseinrichtung vorgeschlagen. Zur weiteren Lösung der Erfindung wird ein Bauteil für ein Fahrzeug, insbesondere Kraftfahrzeug, mit den Merkmalen des Anspruchs 13 vorgeschlagen.

Bei einem erfindungsgemäß ausgestatteten Fahrzeug ist die Stromversorgungseinrichtung dezentral aufgebaut und weist zur elektrischen Versorgung von mindestens einem elektrischen Verbraucher mindestens ein von anderen Stromerzeugern der Stromversorgungseinrichtung elektrisch unabhängige Brennstoffzellensystem auf. Der dezentrale Aufbau schafft durch eine zweckmäßige, räumlich möglichst eng beieinanderliegende Anordnung eines Stromerzeugers und eines oder mehrerer durch diesen zu versorgenden elektrischen Verbraucher eine Vielzahl von Vorteilen. Die mit höherem Fahrzeugkomfort immer komplizierter und aufwendiger werdende Verkabelung von Bordnetzen in Fahrzeugen kann deutlich vereinfacht werden, da in der Regel nur kurze Wege zwischen einem Verbraucher bzw. einer Verbrauchergrupppe und dem ihr ausschließlich zugeordneten Stromerzeuger liegen können. Durch die hiermit einhergehende Verringerung der Zahl von Kabeln und eine deutliche Verkürzung der mittleren Kabellängen können Gewichtsersparnisse erreicht werden, die sich vorteilhaft auf den Energieverbrauch des Fahrzeuges auswirken. Fahrzeugteile wie Türen, Sitze oder dergleichen können komplett mit den ihnen zugeordneten elektrischen Verbrauchern, z.B. Fensterheber oder dergleichen, und dem dazu gehörigen Brennstoffzellensystem als Stromversorgung montiert und danach in wenigen Schritten am zugehörigen Fahrzeug eingebaut werden. Der Arbeitsaufwand für die Montage wird folglich verringert, da Maßnahmen zum elektrischen Anschluß der Verbraucher nicht erforderlich sind. Außerdem können häufige Defektursachen, wie Wakkelkontakte an Steckverbindungen, Kurzschlüsse, Kabelbrände oder Kabelbrüche, Marderbisse oder dergleichen reduziert oder vermieden werden, da Kabel und Kabelverbindungen nur noch im geringen Ausmaß erforderlich sind und darüber hinaus weitgehend an geschützten Stellen liegen. Einige oder alle Stromerzeuger können geschützt außerhalb des Motorraumes liegen. Durch die im Mittel geringen elektrischen Leitungslängen kann auf eine aufwendige Entwicklung eines zweiten Bordnetzes verzichtet werden.

Die Stromversorgung vieler oder aller Verbraucher erfolgt erfindungsgemäß mit Brennstoffzellen. Diese bieten die Möglichkeit, einen angebotenen Treibstoff in kompakten und nahezu beliebig skalierbaren Einheiten mit hohem Wirkungsgrad direkt zu verstromen. Bekanntlich wird hierzu in einem Brennstoffzellensystem, das normalerweise aus mehreren miteinander verschalteten, stapelartig angeordneten einzelnen Brennstoffzellenelementen besteht, aus dem Brennstoff und Luftsauerstoff elektrischer Strom und Wasserdampf erzeugt. Der erforderliche Brennstoff wird entweder direkt aus einem Tank oder Speicher zugeführt oder in einem vorgeschalteten Reformierungsprozeß jeweils bedarfsgerecht aus kohlenwasserstoffhaltigen Energieträgern, wie Methanol, und Wasser hergestellt.

Jedes Brennstoffzellensystem kann unabhängig vom Antriebsmotor betrieben werden und steht daher auch bei ausgeschaltetem Antrieb jederzeit zur elektrischen Versorgung seiner zugeordneten Verbraucher zur Verfügung. Die Energieversorgung aller über Brennstoffzellensysteme versorgten Stromverbraucher beeinträchtigt zudem den Betrieb und insbesondere die Inbetriebnahme des Antriebsmotors nicht. Damit kann ein gegebenenfalls vorhandener Generator bzw. eine Lichtmaschine optimal an den zugehörigen Antrieb angepaßt werden.

Es ist auch möglich, das Fahrzeug völlig ohne antriebsabhängige Stromerzeugungseinrichtung aufzubauen. Eine Versorgung einzelner Verbraucher oder Verbrauchergruppen über jeweils ein ausschließlich zugeordnetes dezentrales Brennstoffzellensystem bietet außerdem die Möglichkeit, dessen Leistungsabgabe durch Auslegung von Größe und Zellenzahl optimal an den Leistungsbedarf der zugeordneten Verbraucher anzupassen, wodurch der Wirkungsgrad verbessert werden kann.

Durch den hohen Wirkungsgrad der Stromerzeugung mittels Brennstoffzellen kann insgesamt der Gesamtverbrauch des Fahrzeuges an Primärenergie gesenkt werden, da die Stromversorgung der elektrischen Verbraucher teilweise oder überwiegend, vorzugsweise sogar vollständig vom Antrieb entkoppelt werden kann.

Die erfindungsgemäße Dezentralisierung der Stromversorgung macht es möglich, ein Brennstoffzellensystem in räumlicher Nähe des zugeordneten Verbrauchers oder der zugeordneten Gruppe von Verbrauchern anzuordnen, wobei zur Vermeidung unnötiger Kabellängen und zur Reduzierung von Leitungsverlusten die Anordnung derart sein kann, daß kein an ein Brennstoffzellensystem angeschlossener Verbraucher mehr als einen Meter oder mehr als 50 cm vom zugeordneten Brennstoffzellensystem entfernt ist. Entsprechend kann ein Fahrzeug je nach Anzahl seiner elektrischen Verbraucher mehrere, insbesondere mehr als zwei oder fünf oder zehn räumlich voneinander getrennte, elektrisch unverbundene Brennstoffzellensysteme aufweisen, die insbesondere verschiedene Ausgangsspannungen und/oder verschiedene Ausgangsleistung haben können.

Zur Verbesserung des Wirkungsgrades kann auf einfache Weise eine individuelle Anpassung der elektrischen Leistung eines Brennstoffzellensystems an den Leistungsbedarf der jeweils zugeordneten Verbraucher vorgenommen werden. Je nach Grad der Dezentralisierung können einem Brennstoffzellensystem weniger als fünf oder weniger als drei elektrische Verbraucher zugeordnet sein. Gegebenenfalls kann einem Brennstoffzellensystem nur ein einzelner elektrischer Verbraucher zugeordnet sein, was eine besonders gute Anpassung und einen entsprechend hohen Wirkungsgrad zur Folge hat. Die Dezentralisierung kann gegebenenfalls so weit betrieben werden, daß das Fahrzeug kein zentrales elektrisches Bordnetz mehr hat, wobei unter einem Bordnetz ein System elektrischer Versorgungsleitungen zu verstehen ist, die an einer oder mehreren Stellen zusammenlaufen, so daß sie insgesamt miteinander in Verbindung stehen oder gebracht werden können. Eine erfindungsgemäße Stromversorgungseinrichtung kann jedoch gegebenenfalls mehrere lokale Netze haben, beispielsweise zur Versorgung mehrerer elektrischer Verbraucher an oder in einem vormontierbaren Bauteil mittels eines einzelnen, dem Bauteil zugeordneten Brennstoffzellensystems.

Erfindungsgemäß ist ein Brennstoffzellensystem an oder in einem als Baugruppe vormontierbaren Bauteil des Fahrzeuges angeordnet, das sämtliche dem Brennstoffzellensystem zugeordnete Verbraucher aufweist. Beispielsweise kann das Fahrzeug mindestens eine Fahrzeugtür haben, an oder in der mindestens ein Brennstoffzellensystem zur elektrischen Versorgung von elektrischen Verbrauchern der Fahrzeugtür angeordnet ist, also beispielsweise eines elektrischen Fensterhebers, einer elektrischen Außenspiegelverstellung oder einer Außenspiegelheizung. In entsprechender Weise kann ein Fahrzeugsitz beispielsweise zur Leistungsversorgung für eine elektrische Sitzheizung und/oder eine elektrisch betriebene Sitzpositionverstellung ein oder mehrere zugeordnete Brennstoffzellensysteme haben. Auch ein mit einem elektrischen Antrieb versehenes Nebenaggregat, wie beispielsweise ein Klimakompressor, kann mit einem gesondert zugeordneten Brennstoffzellensystem ausgestattet sein. Als weiteres Beispiel ist die Ausstattung eines Karosseriemoduls mit einem oder mehreren speziell zugeordneten Brennstoffzellensystemen denkbar, beispielsweise ein als Baugruppe vormontierbares Heckmodul, das zur elektrischen Versorgung der Rücklichter und eines gegebenenfalls eingebauten CD-Spielers oder dergleichen ein Brennstoffzellensystem aufweist. Weitere Beispiele für dezentral versorgbare elektrische Verbraucher sind ein elektrischer Antrieb für ein Schiebedach, ein Motorraum- oder Kofferraumdekkel mit Beleuchtung etc.

Die dezentrale Stromversorgung macht es weiterhin möglich, daß zwischen einem Bauteil, das mindestens einen elektrischen Verbraucher aufweist, und einem mit diesem Bauteil lösbar und/oder beweglich verbundenen anderen Bauteil des Fahrzeuges, beispielsweise dem Fahrzeugchassis, keine elektrische Versorgungsleitungen verlaufen. Dadurch können beispielsweise zwischen einer Fahrzeugkarosserie und einer Fahrzeugtür Kabeldurchführungen, biegebeanspruchte Kabelabschnitte, Steckkontakte oder andere beanspruchte oder störungsanfällige Bereiche vermieden werden. Die Ansteuerung der elektrischen Verbraucher kann beispielsweise durch bauteilinterne Schalter über entsprechende Signalkabel oder kabellos erfolgen.

Der Aufbau eines Brennstoffzellensystems kann dem Leistungsbedarf der angeschlossenen Verbraucher und/oder den Raumverhältnissen am dezentralen Einbauort angepaßt werden. Obwohl es möglich ist, mehrere Brennstoffzellen an eine gemeinsame Wasserstoffversorgung anzuschließen, ist es bevorzugt, die Systeme autark auszulegen, so daß ein Brennstoffzellensystem mindestens eine Brennstoffzelle oder eine Gruppe von Brennstoffzellen (Stack) und eine zugeordnete Wasserstoffversorgungseinrichtung für die Brennstoffzelle umfaßt. Die Wasserstoffversorgungseinrichtung kann mindestens einen Wasserstoffbehälter oder - speicher aufweisen, der vorzugsweise leicht auswechselbar am zugeordneten Bauteil angebracht ist. Insbesondere kann hierzu eine Wasserstoffpatrone eingesetzt werden. Derartige begrenzte Wasserstoffvorräte eignen sich insbesondere für Brennstoffzellensysteme solcher Verbraucher, deren Leistungsbedarf gering ist und/oder die nur hin und wieder oder kurzzeitig betrieben werden, wie beispielsweise elektrische Fensterheber. Es ist auch möglich, daß eine Wasserstoffversorgungseinrichtung mindestens einen Treibstofftank zur Aufnahme von kohlenwasserstoffhaltigem Flüssigtreibstoff, insbesondere Methanol, sowie eine zugeordnete Reformierungseinrichtung zur Umwandlung des Treibstoffes in Wasserstoff aufweist. Dieser Treibstofftank kann wiederum auswechselbar und/oder von außerhalb des Bauteils befüllbar ausgebildet sein. Es kann auch so sein, daß mehrere Reformierungseinrichtungen aus einem gemeinsamen Treibstofftank gespeist werden. Außerdem ist der direkte Betrieb der Brennstoffzellen mit flüssigen Treibstoffen, beispielsweise in einer Direkt-Methanol-Brennstoffzelle, möglich.

Es ist für den Fachmann erkennbar, daß eine dezentrale Stromversorgung in Fahrzeugen mittels Brennstoffzellen eine Vielzahl konstruktiver Varianten zuläßt, die jeweils im Hinblick auf Optimierung des Wirkungsgrades und/oder Optimierung von Montagefreundlichkeit und/oder optimale Berücksichtigung räumlicher Gegebenheiten am Einbauort in der Nähe elektrischer Verbraucher ausgewählt werden können.

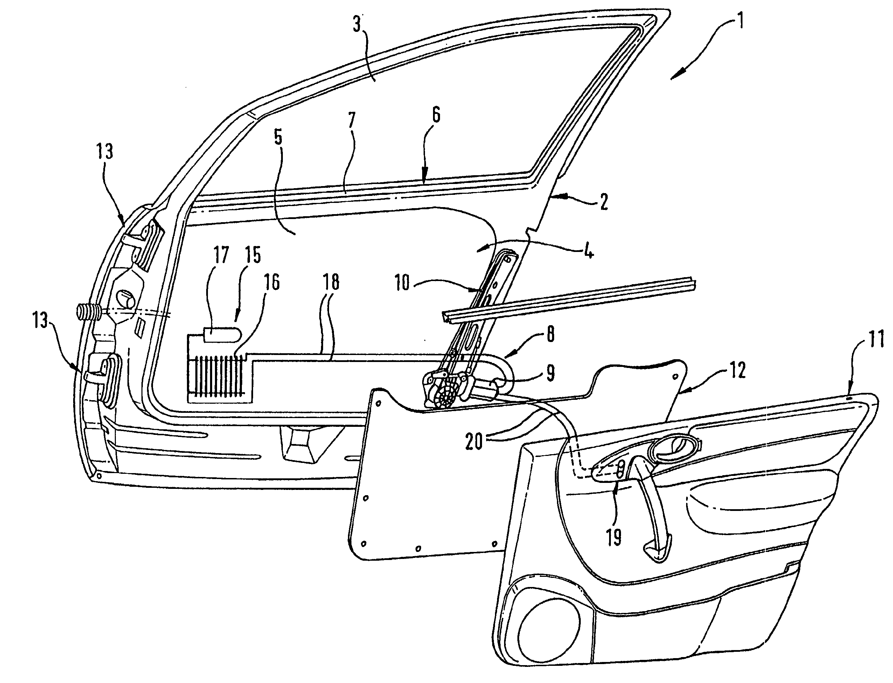

Weitere Merkmale und Einzelheiten der Erfindung ergeben sich aus der nachfolgenden Beschreibung einer bevorzugten Ausführungsform in Verbindung mit der Zeichnung und den Unteransprüchen. Hierbei können die einzelnen Merkmale jeweils für sich allein oder zu mehreren in Kombination miteinander bei einer Ausführungsform verwirklicht sein.

Ein Ausführungsbeispiel der Erfindung ist in der Zeichnung dargestellt und wird im folgenden näher erläutert.

Die einzige Figur zeigt eine perspektivische Explosionsdarstellung einer PKW-Fahrzeugtür mit einem elektrischen Fensterheber und einem Brennstoffzellensystem zur elektrischen Versorgung des Fensterhebers.

Die perspektivische Explosionsdarstellung der einzigen Figur zeigt mehrere vorgefertigte Komponenten einer Beifahrertür 1 eines nicht dargestellten Personenkraftwagens. Die Tür hat ein selbsttragendes Stahlblech-Rahmenteil 2 mit einer durch eine nicht gezeigte Fensterscheibe verschließbaren oberen Rahmenöffnung 3 und einer darunterliegenden, etwa viereckigen unteren Rahmenöffnung 4, deren Außenseite durch eine Stahlblech-Türhaut 5 abgedeckt ist.

Zwischen den Rahmenöffnungen 3, 4 liegt eine Querstrebe 6, die einen Längsschlitz 7 hat, durch den eine in ihrer Form der Form der oberen Rahmenöffnung 3 angepaßte, nicht gezeigte Fensterscheibe abgedichtet hindurchführbar ist. Zum Heben und Absenken der Fensterscheibe ist ein elektrischer Fensterheber 8 vorgesehen, der einen an der hinteren Vertikalstrebe des Rahmens befestigten, elektrischen Antrieb 9 hat, der über eine Seilzugeinrichtung 10 an einem nicht gezeigten Fensterträger angreift. Die untere Rahmenöffnung 4 wird bei Fertigmontage der Tür nach innen durch Anschrauben einer Innenverkleidung 11 unter Zwischenlage einer wasserdichten Abdeckung 12 abgeschlossen. Zwischen Abdeckung 12 und Außenhaut 5 ist ein seitlich durch die Rahmenstreben begrenzter Türinnenraum gebildet, der Platz zur Aufnahme des abgesenkten Fensters bietet. Am vorderen vertikalen Rahmenteil sind übereinanderliegend zwei Scharnierelemente 13 angeschweißt, die bei der Montage der fertig montierten Tür mit komplementären Scharnierelementen der Fahrzeugkarosse verbunden werden.

Zur Versorgung des elektrischen Fensterhebers 8 mit elektrischem Strom ist ein Brennstoffzellensystem 15 vorgesehen, das einen Brennstoffzellenstapel 16 und einen daran angeschlossenen Wasserstoffspeicher in Form einer auswechselbaren Wasserstoffpatrone 17 umfaßt. Das etwa 80 bis 100 cm entfernt vom Fensterheber angebrachte Brennstoffzellensystem 15 ist über ein Paar elektrischer Versorgungsleitungen 18 mit dem Antrieb 9 des Fensterhebers verbunden. Die Steuerung des Fensterhebers erfolgt über einen an der Innenverkleidung 11 angebrachten Schalter 19, der über Steuerleitungen 20 mit dem elektrischen Antrieb 9 verbunden ist.

Die Einzelzellen des Stapels oder Stacks des Brennstoffzellenaggregats 16 sind bei der beispielhaft gezeigten Ausführungsform als luftatmende Wasserstoff-Luft-Brennstoffzellen mit protonenleitender Membran ausgebildet. Die Gesamtleistung des Brennstoffzellenstapels 16 ist dem Leistungsbedarf von ca. 20 Watt des elektrischen Antriebs 9 des Fensterhebers 8 angepaßt. Die Menge des in der Wasserstoffpatrone 17 vorliegenden primären Energieträgers ist so bemessen, daß sie für den sporadischen und meist nur kurzzeitigen Betrieb des Fensterhebers über große Zeiträume ausreicht, die jedenfalls so lang sind, daß es ausreicht, die Wasserstoffpatrone 17 im Rahmen der üblichen Serviceintervalle des Fahrzeuges auszutauschen. Dies kann nach Wegnahme der Innenverkleidung 11 mit Abdeckung 12 mit wenigen Handgriffen erfolgen.

Die Fahrzeugtür 1 stellt ein Beispiel für ein elektrisch vom übrigen Fahrzeug völlig autarkes Bauteil mit einem elektrischen Verbraucher (Fensterheber) dar. Da sowohl die elektrischen Versorgungsleitungen 18, als auch die zur Ansteuerung des Antriebes 9 genutzten Steuerleitungen 20 in die Tür integriert sind, kann die Tür komplett und elektrisch betriebsfertig beim Zulieferer oder an anderer Stelle fertig montiert und in wenigen Schritten an der Fahrzeugkarosse eingebaut werden. Beim Einbau sind keinerlei Maßnahmen zum elektrischen Anschluß der Tür an eine fahrzeuginterne Stromversorgung notwendig. Dadurch verringert sich der Arbeitsaufwand für die Montage erheblich. Außerdem werden häufige Defektursachen, wie Wackelkontakte an Steckverbindungen oder Kabelbrüche im Schwenkbereich zwischen Tür und Karosserie vermieden. Zudem verlaufen die elektrischen Versorgungsleitungen 18 und die Steuerleitungen 20 vor Verschmutzung, Beschädigung und beispielsweise Marderbiß geschützt im Inneren der Tür.

Das Fahrzeug kann in der auf der anderen Seite der Karosse anzubringenden Fahrertür und gegebenenfalls in den Hintertüren weitere entsprechende Brennstoffzellensysteme zur Versorgung der dort tätigen elektrischen Verbraucher haben. Auch andere elektrische Verbraucher des Fahrzeuges können eigene Brennstoffzellensysteme zu ihrer elektrischen Versorgung haben. Das gezeigte System, bei dem dem Brennstoffzellenaggregat 16 direkt Wasserstoff aus dem Vorrat 17 bereitgestellt wird, bietet sich besonders für elektrische Kleinverbraucher wie Fensterheber, Spiegelverstellung, Schiebedachverstellung oder dergleichen an. Für die dezentrale Stromversorgung größerer Verbraucher, beispielsweise eines Klimakompressors, kann ein Betrieb mit Brennstoffzellen und Kohlenwasserstoffreformierung erfolgen.

Eine dezentrale Stromversorgung mittels Brennstoffzellen ist nicht nur bei den beispielhaft erläuterten Personenkraftwagen von Vorteil, sondern auch bei anderen Landfahrzeugen, wie beispielsweise Lastkraftwagen oder dergleichen. Auch Wasserfahrzeuge oder Flugzeuge können auf erfindungsgemäße Weise mit einer Stromversorgungseinrichtung ausgestattet werden, die sich besonders durch hohen Wirkungsgrad und Montagefreundlichkeit auszeichnet.

## Patentansprüche

1. Stromversorgungseinrichtung für ein Fahrzeug, mit mindestens einem von anderen Stromerzeugern der Stromversorgungseinrichtung elektrisch unabhängigen Brennstoffzellensystem (15) zur Versorgung mindestens eines zugeordneten elektrischen Verbrauchers (9),
**dadurch gekennzeichnet ,**
**daß** die Stromversorgungseinrichtung dezentral aufgebaut ist und das mindestens eine Brennstoffzellensystem (15) an oder in einem als Baugruppe vormontierbaren, mindestens einen elektrischen Verbraucher (9) aufweisenden Bauteil (1) des Fahrzeuges angeordnet ist.

2. Stromversorgungseinrichtung nach Anspruch 1, **gekennzeichnet durch** mindestens eine Fahrzeugtür (1), an oder in der mindestens ein Brennstoffzellensystem (15) zur elektrischen Versorgung von mindestens einem elektrischen Verbraucher (9) der Fahrzeugtür (1) angeordnet ist, wobei der Verbraucher insbesondere an Fensterheber, eine Außenspiegelheizung und/oder eine elektrische Spiegelverstellung ist.

3. Stromversorgungseinrichtung nach Anspruch 1 oder 2, **gekennzeichnet durch** mindestens einen, vorzugsweise lösbar und/oder beweglich am Fahrzeug befestigbaren Fahrzeugsitz, an oder in dem mindestens ein Brennstoffzellensystem zur elektrischen Versorgung von elektrischen Verbrauchern des Fahrzeugsitzes angeordnet ist, wobei ein elektrischer Verbraucher insbesondere eine elektrische Sitzheizung und/oder eine elektrische Sitzpositionsverstellung ist.

4. Stromversorgungseinrichtung nach einem der vorhergehenden Ansprüche, **gekennzeichnet durch** mindestens ein mit einem elektrischen Antrieb versehenes Nebenaggregat, an oder in dem mindestens ein Brennstoffzellensystem zur elektrischen Versorgung des Antriebs angeordnet ist, wobei das Nebenaggregat insbesondere ein Klimakompressor ist.

5. Stromversorgungseinrichtung nach einem der vorhergehenden Ansprüche, **gekennzeichnet durch** mindestens ein Karosseriemodul, insbesondere ein Heckmodul, an oder in dem mindestens ein Brennstoffzellensystem zur elektrischen Versorgung von elektrischen Verbrauchern des Karosseriemoduls angeordnet ist.

6. Stromversorgungseinrichtung nach einem der vorhergehenden Ansprüche, **dadurch gekennzeichnet, daß** das Brennstoffzellensystem (15) mindestens eine Brennstoffzelle oder eine Gruppe von Brennstoffzellen (16) und eine zugeordnete Brennstoffversorgungseinrichtung (17) für die Brennstoffzellen umfaßt.

7. Stromversorgungseinrichtung nach Anspruch 6, **dadurch gekennzeichnet, daß** die Brennstoffversorgungseinrichtung mindestens einen, vorzugsweise auswechselbaren Wasserstoffspeicher, insbesondere eine Wasserstoffpatrone (17), aufweist.

8. Stromversorgungseinrichtung nach Anspruch 6 oder 7, **dadurch gekennzeichnet, daß** die Brennstoffversorgungseinrichtung mindestens einen Treibstofftank zur Aufnahme von kohlenwasserstoffhaltigem Flüssigtreibstoff, insbesondere Methanol, aufweist.

9. Stromversorgungseinrichtung nach Anspruch 8, **dadurch gekennzeichnet, daß** die Brennstoffversorgungseinrichtung zusätzlich eine Reformierungseinrichtung zur Umwandlung des Treibstoffs in Wasserstoff aufweist.

10. Stromversorgungseinrichtung nach Anspruch 8, **dadurch gekennzeichnet, daß** der Treibstofftank auswechselbar ist.

11. Fahrzeug, insbesondere Kraftfahrzeug, mit einer Stromversorgungseinrichtung nach einem der Ansprüche 1 bis 10.

12. Fahrzeug, insbesondere Kraftfahrzeug, mit einer Stromversorgungseinrichtung nach Anspruch 8, **dadurch gekennzeichnet, daß** der Treibstofftank auswechselbar und/oder von außerhalb des Fahrzeugs oder des Bauteils befüllbar ausgebildet ist.

13. Bauteil (1) für ein Fahrzeug, mit mindestens einem elektrischen Verbraucher und Mitteln zur Befestigung des Bauteils an mindestens einem anderen Bauteil des Fahrzeuges,
**dadurch gekennzeichnet ,**
**daß** das Bauteil (1) zur elektrischen Versorgung seiner elektrischen Verbraucher (8) mindestens ein Brennstoffzellensystem aufweist.

14. Bauteil nach Anspruch 13, **dadurch gekennzeichnet, daß** das Bauteil als Baugruppe gesondert von anderen Bauteilen des Fahrzeuges vormontierbar ist.

15. Bauteil nach Anspruch 13 oder 14, **dadurch gekennzeichnet, daß** das Bauteil eine Fahrzeugtür (1) oder ein Fahrzeugsitz oder ein mit einem elektrischen Antrieb versehenes Nebenaggregat, insbesondere ein Klimakompressor, und/oder ein Bauteil mit einer lichtelektrischen Einrichtung ist.

## Claims

1. Power supply device for a vehicle, having at least one fuel cell system (15), which is electrically independent of other electricity generators in the power supply device, for supplying at least one associated electrical load (9),
**characterized**
**in that** the power supply device is designed on a decentralized basis, and the at least one fuel cell system (15) is arranged on or in a vehicle component (1) which can be installed in advance as an assembly and has at least one electrical load (9).

2. Power supply device according to Claim 1, **characterized by** at least one vehicle door (1), on or in which at least one fuel cell system (15) is arranged for electrically supplying at least one electrical load (9) in the vehicle door (1), with the load in particular being a window opener, external mirror heating, and/or electrical mirror adjustment.

3. Power supply device according to Claim 1 or 2, **characterized by** at least one vehicle seat, which can preferably be attached to the vehicle in a detachable and/or moving manner, on or in which at least one fuel cell system is arranged for electrically supplying electrical loads in the vehicle seat, with an electrical load being, in particular, electrical seat heating and/or electrical seat position adjustment.

4. Power supply device according to one of the preceding claims, **characterized by** at least one secondary appliance, which is provided with an electrical drive and on or in which at least one fuel cell system is arranged for electrically supplying the drive, with the secondary appliance being, in particular, an air-conditioning compressor.

5. Power supply device according to one of the preceding claims, **characterized by** at least one bodywork module, in particular a rear-end module, on or in which at least one fuel cell system is arranged for electrically supplying electrical loads in the bodywork module.

6. Power supply device according to one of the preceding claims, **characterized in that** the fuel cell system (15) comprises at least one fuel cell or a group of fuel cells (16) and an associated fuel supply device (17) for the fuel cells.

7. Power supply device according to Claim 6, **characterized in that** the fuel supply device has at least one, preferably replaceable, hydrogen store, in particular a hydrogen cartridge (17).

8. Power supply device according to Claim 6 or 7, **characterized in that** the fuel supply device has at least one fuel tank for holding a liquid fuel which contains hydrocarbon, in particular methanol.

9. Power supply device according to Claim 8, **characterized in that** the fuel supply device additionally has a reforming device for conversion of the fuel to hydrogen.

10. Power supply device according to Claim 8, **characterized in that** the fuel tank is replaceable.

11. Vehicle, in particular a motor vehicle, having a power supply device according to one of Claims 1 to 10.

12. Vehicle, in particular a motor vehicle, having a power supply device according to Claim 8, **characterized in that** the fuel tank is designed to be replaceable and/or replenishable from outside the vehicle or the component.

13. Component (1) for a vehicle, having at least one electrical load and means for attachment of the component to at least one other component of the vehicle,
**characterized**
**in that** the component (1) has at least one fuel cell system for electrically supplying its electrical load (8).

14. Component according to Claim 13, **characterized in that** the component can be installed in advance as an assembly separately from other components of the vehicle.

15. Component according to Claim 13 or 14, **characterized in that** the component is a vehicle door (1), a vehicle seat or a secondary appliance which is provided with an electrical drive, in particular an air-conditioning compressor and/or a component with an electrical lighting device.

## Revendications

1. Dispositif d'alimentation électrique pour un véhicule comprenant au moins un système de piles à combustible (15) électriquement indépendant des autres sources de courant du dispositif d'alimentation électrique pour alimenter au moins un appareillage électrique (9) associé, **caractérisé en ce que** le dispositif d'alimentation électrique a une construction décentralisée et l'au moins un système de piles à combustible (15) est monté sur ou dans un composant (1) du véhicule pouvant être prémonté sous la forme d'un sous-ensemble et présentant au moins un appareillage électrique (9).

2. Dispositif d'alimentation électrique selon la revendication 1, **caractérisé par** au moins une portière de véhicule (1) sur ou dans laquelle est monté l'au moins un système de piles à combustible (15) pour alimenter au moins un appareillage électrique (9) de la portière de véhicule (1), l'appareillage étant notamment un lève-vitre, un chauffage de rétroviseur extérieur et/ou un positionnement électrique de rétroviseur.

3. Dispositif d'alimentation électrique selon la revendication 1 ou 2, **caractérisé par** au moins un siège de véhicule pouvant être fixé de préférence de manière amovible et/ou mobile sur le véhicule, sur ou dans lequel est monté l'au moins un système de piles à combustible pour alimenter des appareillages électriques dans le siège de véhicule, un appareillage électrique étant notamment un chauffage de siège électrique et/ou un positionnement de siège électrique.

4. Dispositif d'alimentation électrique selon l'une des revendications précédentes, **caractérisé par** au moins un groupe auxiliaire muni d'un mécanisme d'entraînement électrique sur ou dans lequel est monté l'au moins un système de piles à combustible pour alimenter le mécanisme d'entraînement électrique, le groupe auxiliaire étant notamment un compresseur de climatisation.

5. Dispositif d'alimentation électrique selon l'une des revendications précédentes, **caractérisé par** au moins un module de carrosserie, notamment un module d'arrière sur ou dans lequel est monté l'au moins un système de piles à combustible pour alimenter des appareillages électriques du module de carrosserie.

6. Dispositif d'alimentation électrique selon l'une des revendications précédentes, **caractérisé en ce que** le système de piles à combustible (15) comprend au moins une pile à combustible ou un groupe de piles à combustible (16) et un dispositif d'alimentation en combustible (17) associé pour les piles à combustible.

7. Dispositif d'alimentation électrique selon la revendication 6, **caractérisé en ce que** le dispositif d'alimentation en combustible présente au moins un accumulateur d'hydrogène remplaçable, notamment une cartouche d'hydrogène (17).

8. Dispositif d'alimentation électrique selon la revendication 6 ou 7, **caractérisé en ce que** le dispositif d'alimentation en combustible présente au moins un réservoir de carburant destiné à recevoir un carburant liquide contenant un hydrocarbure, notamment du méthanol.

9. Dispositif d'alimentation électrique selon la revendication 8, **caractérisé en ce que** le dispositif d'alimentation en combustible présente en plus un dispositif de reformage destiné à convertir le carburant en hydrogène.

10. Dispositif d'alimentation électrique selon la revendication 8, **caractérisé en ce que** le réservoir de carburant est remplaçable.

11. Véhicule, notamment véhicule automobile, équipé d'un dispositif d'alimentation électrique selon l'une des revendications 1 à 10.

12. Véhicule, notamment véhicule automobile, équipé d'un dispositif d'alimentation électrique selon la revendication 8, **caractérisé en ce que** le réservoir de carburant est configuré de manière à pouvoir être remplacé et/ou rempli depuis l'extérieur du véhicule ou du composant.

13. Composant (1) pour un véhicule comprenant au moins un appareillage électrique et des moyens pour fixer le composant à au moins un autre composant du véhicule, **caractérisé en ce que** le composant (1) présente au moins un système de piles à combustible pour l'alimentation électrique de ses appareillages électriques (8).

14. Composant selon la revendication 13, **caractérisé en ce que** le composant peut être prémonté sous la forme d'un sous-ensemble séparément des autres composants du véhicule.

15. Composant selon la revendication 13 ou 14, **caractérisé en ce que** le composant est une portière de véhicule (1), un siège de véhicule ou un groupe auxiliaire muni d'un mécanisme d'entraînement électrique, notamment un compresseur de climatisation et/ou un composant muni d'un dispositif d'éclairage électrique.
